# EUROPEAN PATENT APPLICATION

(11) **EP 2 602 912 A2**
(43) Date of publication of application: **12.06.2013**
(21) Application number: 12195543.9
(22) Date of filing: 04.12.2012
(51) Int. Cl.: H02K 1/27

(54) **Brushless motor**

(30) Priority: 05.12.2011 JP 2011265987; 23.11.2012 KR 20120133677
(71) Applicant: Samsung Electronics Co., Ltd, Gyeonggi-do 443-742 (KR)
(72) Inventor: Katsuhisa, Mukai, Osakabu (JP); Futoshi, Yamane, Osakabu (JP)
(74) Representative: Walaski, Jan Filip

(57) **Abstract**

Disclosed herein is a brushless motor that includes a rotor rotating about a rotation axis and having a rotor core and a plurality of magnets, and a stator disposed around the rotor, wherein the magnets are arranged to be equally spaced and embedded in an outer circumferential portion of the rotor core, and the rotor core includes a pair of slits symmetrically disposed about the reference line, wherein when a portion of the magnet between the center point and each of the edges is divided into eleven portions by parting lines parallel to the reference line, an inner end of the slit is positioned outside a parting line set as an eighth parting line when the parting lines are arranged in order from a side of the reference line toward the edge.

## Description

The present invention relates to a brushless motor including a motor provided with a slit.

Brushless motors are generally classified into a surface-mounted permanent magnet (SPM) type and an interior permanent magnet (IPM) type. SPM motors have magnets installed on the outer circumferential surface of a rotor, while IPM motors have magnets embedded in the rotor.

Compared to the SPM motors, the IPM motors may ensure that magnets are not separated from the rotor and allow reluctance torque to be actively used. The IPM motors are used as a driving source of a compressor used for, for instance, an air conditioner or a refrigerator.

For the IPM motors, a plurality of slits is sometimes formed on the outer circumferential side of a permanent magnet installed inside the rotor, in order to improve magnetic characteristics. Various shapes and arrangements have been proposed for those slits.

For example, Japanese Patent Application Publication No. 2011-78283 discloses an IPM motor having a plurality of slits inclined toward the direction of rotation of the motor or the opposite direction to the direction of rotation and an IPM motor having a plurality of slits inclined toward a center line of a magnetic pole.

In addition, Japanese Patent Application Publication No. 2011-78283 proposes making a torque phase of a magnetic pole different from that of a neighboring magnetic pole by alternately changing the direction of inclination of slits of the magnetic poles between the direction of rotation and the direction opposite to the direction of rotation, in order to cancel high frequency components to reduce torque ripple.

The technique employed by Japanese Patent Application Publication No. 2011-78283 may produce a complicated structure of the slits by making the shapes and arrangements of the slits of neighboring magnetic poles asymmetrical, causing handling of the structure to be difficult.

Therefore, it is an aspect of the present invention to provide a brushless motor that may effectively reduce torque ripple by providing a simplified structure of slits.

Additional aspects of the invention will be set forth in part in the description which follows and, in part, will be obvious from the description, or may be learned from practice of the invention.

In accordance with one aspect of the present invention, a brushless motor includes a rotor rotating about a rotation axis and having a rotor core and a plurality of magnets, and a stator disposed around the rotor with a gap placed between the stator and the rotor, wherein the magnets have a rectangular parallelepiped shape and are arranged to be equally spaced and embedded in an outer circumferential portion of the rotor core in a manner that allows a reference line radially extending from the rotation axis to be perpendicular to a center point between opposite edges of a lateral section of each of the magnets, and the rotor core includes a pair of slits symmetrically disposed about the reference line, between the opposite edges of each of the magnets, wherein each of the slits are inclined to allow an outer end thereof positioned radially outward from the rotation axis to be positioned further away from the reference line than an inner end thereof positioned radially inward, and when a portion of the magnet between the center point and each of the edges is divided into eleven portions by parting lines parallel to the reference line, the inner end of the slit is positioned outside a parting line set as an eighth parting line when the parting lines are arranged in order from a side of the reference line toward the edge.

When the slits are positioned within a predetermined range in the proximity of the magnet, torque ripple may be effectively suppressed even with a simplified structure of the slits.

An inclination angle of each of the slits relative to a line perpendicular to the reference line may not be greater than 80°.

In addition, only the pair of slits may be formed on the rotor core, the rotor core may be provided with a center slit formed on the reference line and arranged in a penetrating manner in a direction of the rotation axis, as well as the pair of slits. A group of auxiliary slits may be further arranged between the center slit and the pair of slits in the rotor to be axially symmetrically about the reference line.

These and/or other aspects of the invention will become apparent and more readily appreciated from the following description of the embodiments, taken in conjunction with the accompanying drawings of which:
FIG. 1 is a schematic perspective view illustrating a motor according to an exemplary embodiment of the present invention;
FIG. 2 is a schematic cross-sectional view of the motor according to the illustrated embodiment of the present invention;
FIG. 3 is a schematic cross-sectional view taken along the line I-I of FIG. 2;
FIG. 4 is a schematic enlarged view illustrating main parts of FIG. 3;
FIG. 5 is a graph showing a relationship between inclination angle of a slit and torque ripple;
FIG. 6 is a view illustrating inclination of the slit;
FIG. 7 is a graph showing a relationship between a position of the slit and torque ripple;
FIG. 8 is a schematic view illustrating a motor according to another embodiment of the present invention;
FIG. 9 is a schematic view illustrating a motor according to another embodiment of the present invention;
FIG. 10 is a schematic view illustrating a motor according to a further embodiment of the present invention;
FIG. 11A and FIG. 11B are schematic views illustrating further examples of a slit.

Reference will now be made in detail to the embodiments of the present invention, examples of which are illustrated in the accompanying drawings, wherein like reference numerals refer to like elements throughout.

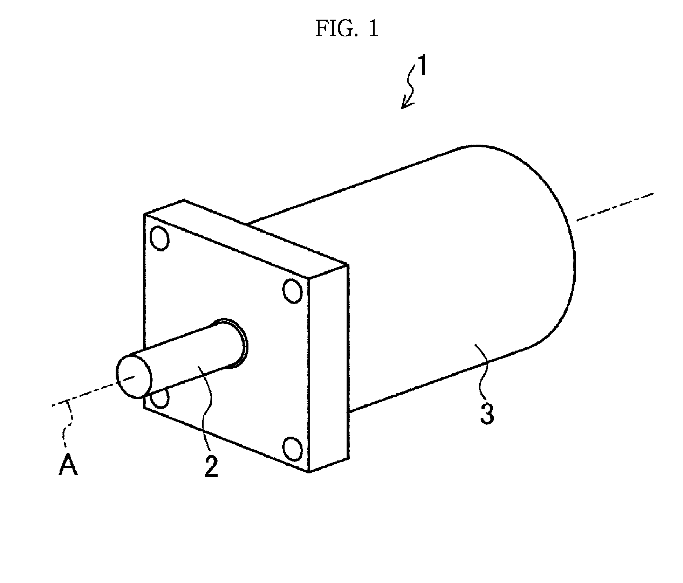

FIGS. 1 to 3 illustrate a motor 1 according to an exemplary embodiment of the present invention. The motor 1, which is a brushless motor of an inner rotor type, is used as a driving source of a compressor of, for example, a refrigerator. The motor 1 includes a shaft 2, a motor case 3, a rotor 4, a stator 5 and an electric power distribution member 7.

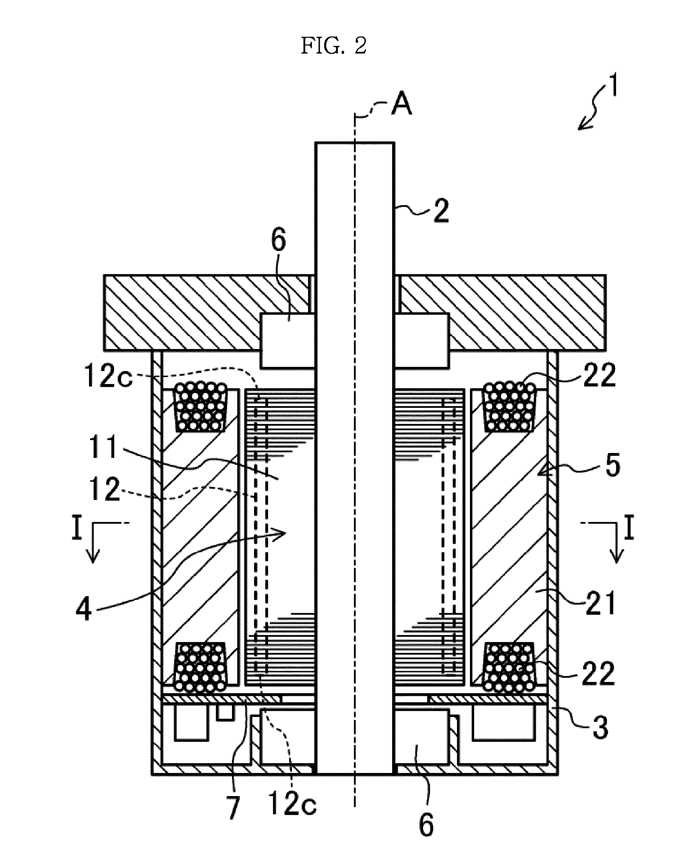

As shown in FIG. 2, the shaft 2 is supported by the motor case 3 through bearings 6 and rotates about a rotation axis A. The rotor 4, which has a circular cylindrical outer appearance, is fixed to the middle portion of the shaft 2 with its center of rotation aligned with that of the shaft 2.

The rotor 4 includes a rotor core 11 and a plurality of magnets 12 (six magnets 12 in the illustrated embodiment). The rotor core 11 is formed in a cylindrical shape by stacking a plurality of disc-shaped metal plates in a direction of the rotation axis A (i.e., in a direction in which the rotation axis A extends). The motor 1 is an interior permanent magnet (IPM)-type motor, and each magnet 12 of the motor 1 is embedded in an outer circumferential portion of the rotor core 11.

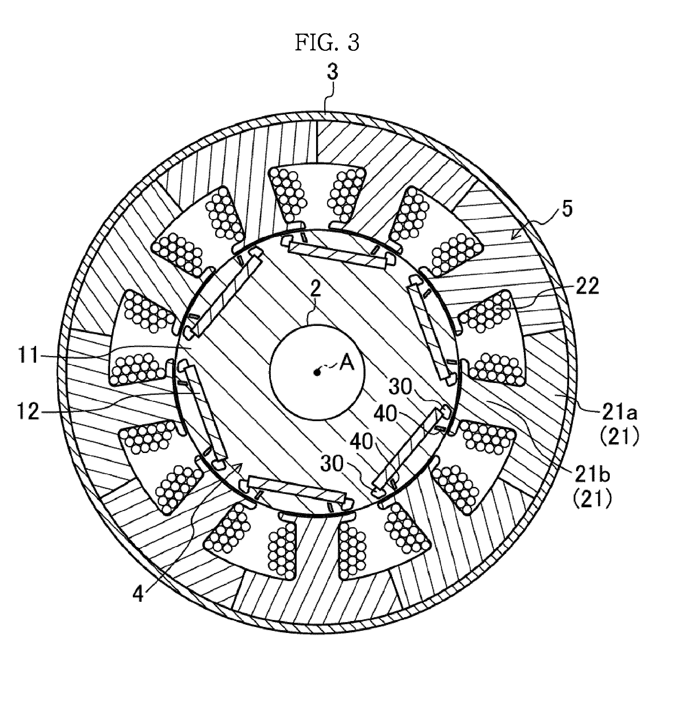

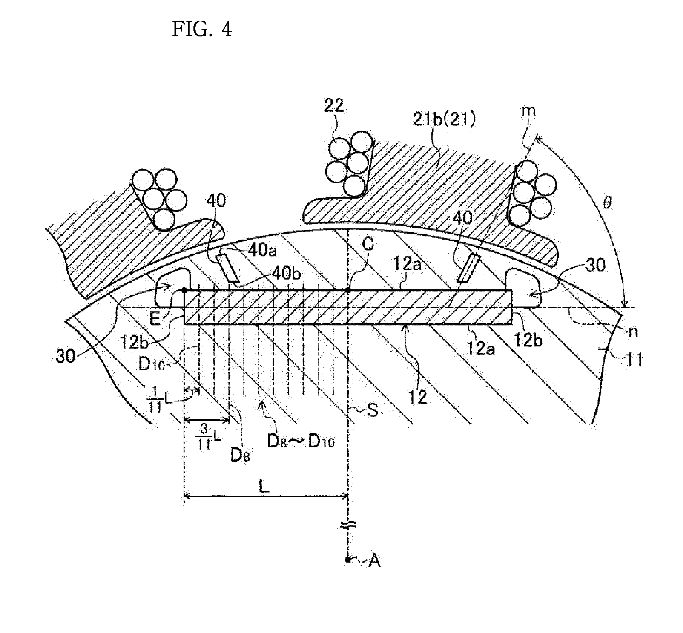

As shown in the cross-sectional view of FIG. 3, magnets 12 are formed in the same shape and dimensions and have a shape of a rectangular parallelepiped. That is, as shown in FIG. 4, each of the magnets 12 has a shape of a long slender flat plate, and is provided with a pair of rectangular lateral sections 12a, a pair of longitudinal sections 12b connected to the lateral sections 12a, and a pair of cross sections 12c. The magnets 12 are disposed in a circumferential direction to be equally spaced from each other and have the north and south poles thereof alternately arranged, with the cross sections 12c facing the direction of the rotation axis A. Details of the structure of the rotor 4 will be described below.

The stator 5 having a cylindrical outer appearance is mounted on the inner side of the motor case 3. The inner circumferential surface of the stator 5 is arranged to face the outer circumferential surface of the rotor 4 with a small gap placed between the inner circumferential surface of the stator 5 and the outer circumferential surface of the rotor 4.

The stator 5 includes a stator core 21 and coils 22. The stator core 21 includes a base 21a having a doughnut shape, and a plurality of teeth portions 21b (nine teeth portions in the illustrated embodiment) radially protruding from the inner circumferential surface of the base 21a toward the center of rotation. A plurality of coils 22 (nine coils in the illustrated embodiment) is formed by winding wires around each teeth portion 21b with an insulator (not shown) placed in the wires.

The electric power distribution member 7 having connection terminals is installed inside the motor case 3. Electric current supplied from an external power source not shown to the motor 1 is distributed to respective coils 22 through the electric power distribution member 7 with a predetermined timing. Thereby, a magnetic field formed between the magnet 21 of the rotor 4 and each of the coils 22 of the stator 5 changes to generate torque to rotate the shaft 2. The motor 1 is rotational in both normal and reverse directions and rotates according to control of the current supplied.

When the shaft 2 is rotated, the magnetic force between the rotor 4 and the stator 5 changes, resulting in torque ripple. To effectively suppress this torque ripple, slits 40 are formed in the rotor core 11. For improvement of productivity, positions and angles of the slits 40 are proposed to allow torque ripple to be effectively suppressed with simplified configuration of the slits.

FIG. 4 shows an outer circumferential portion of the rotor core 11 with the magnet 12 embedded therein, viewed in the direction of the rotation axis A. All six outer circumferential portions have the same configuration. Conditions of positions and angles of the magnet 12 and slits 40 will be described with reference to FIG. 4.

The magnet 12 is embedded in the rotor core 11 in the proximity of the outer circumferential periphery of the rotor core 11, with the lateral sections 12a of the magnet 12 arranged to face a radial direction. That is, when an imaginary reference line S is drawn from the center (i.e., the rotation axis A) in a radial direction to pass through the center point C between opposite edges of the lateral section 12a of the magnet 12, the reference line S is arranged to be perpendicular to the lateral section 12a.

A pair of flux barriers 30 is formed on the portions of the rotor core 11 where the opposite edges of the magnet 12 are arranged to prevent disconnection of magnetic flux. That is, as flux barriers 30, long holes penetrating the rotor core 11 in the direction of the rotation axis A are formed at the positions of the ends of the lateral section 12a, i.e., the ends where the lateral section 12a facing outside in the radial direction is connected with the longitudinal sections 12b.

Each of the flux barriers 30 has a cross-sectional area radially stretching outward from the corresponding end. The cross-sectional area has a substantially fan-shaped or square-shaped form stretching up to the proximity of the outer circumferential surface of the rotor core 11 including the periphery of the edge of the lateral section 12a facing the outside of the magnet 12 in the radial direction (the edge portion formed between the lateral section 12a and the longitudinal section 12b).

In addition, two slits 40 penetrating the rotor core 11 in the direction of rotation axis A like the flux barriers 30 are formed at an outer circumferential portion of the rotor core 11 arranged outside the magnet 12 in the radial direction between the flux barriers 30. The positions and shapes of the slits 40 are axially symmetrical about the reference line S.

Each of the slits 40 has a substantially long and slender rectangular cross section extending substantially in the radial direction. Each of the slits 40 is inclined to allow one end thereof positioned radially outward from the rotation axis (referred to as the outer end 40a) to be positioned further away from the reference line S than the other end thereof positioned radially inward (referred to as the inner end 40b).

In the motor 1, the outer end 40a of each slit 40 is almost parallel to the outer circumferential periphery of the rotor core 11 it faces, while the inner end 40b of the slit 40 is almost parallel to the lateral section 12a of the magnet 12.

The inclination angle (θ) of each of the slits 40 relative to the lateral section 12a of the magnet 12 is set to a value less than 80°.

As shown in FIG. 4, the angle at which the longitudinal axis (m) of each of the slits 40 (i.e., a line passing through the widthwise center of the slit 40) crosses the lateral section 12a (i.e., a reference line (n) parallel to the lateral section 12a in FIG. 4) is set to be less than 80°. By setting the inclination angle (θ) of each slit 20 as above, torque ripple may be suppressed.

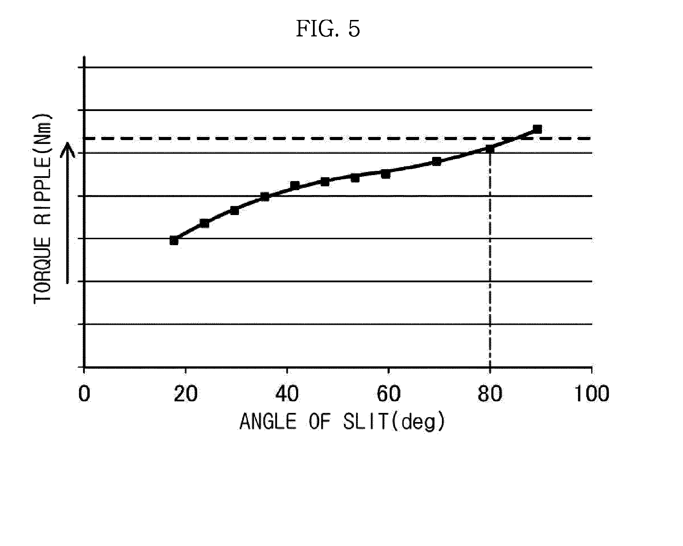

FIG. 5 illustrates a result (a graph) of a test conducted to study the relationship between the inclination angle (θ) of the slit 20 and torque ripple. The vertical axis represents magnitudes of torque ripple. The horizontal axis represents the inclination angle (θ) of the slit 20. The dashed line represents a test result for the case in which the slit 40 is not provided, given for comparison.

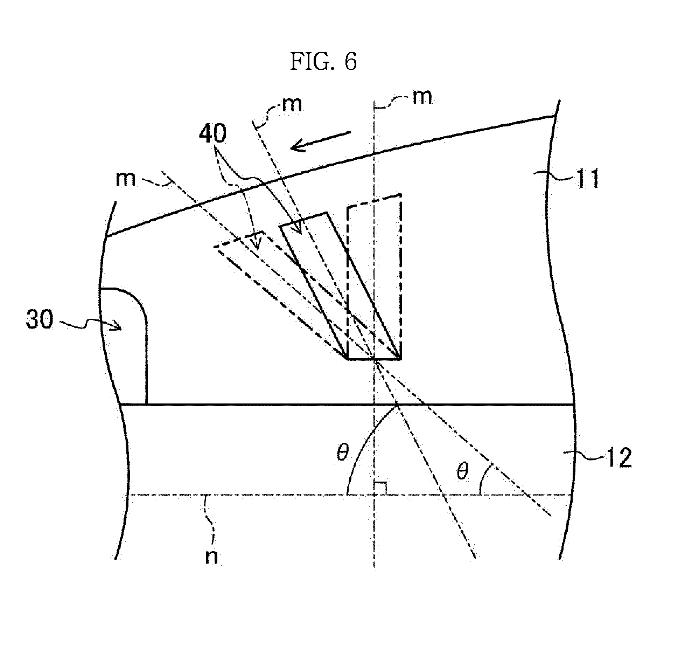

In the test, as shown with an arrow in FIG. 6, torque ripple is measured at predetermined angles by changing the inclination angle of the slit 40 from the angle at which the slit 40 is perpendicular to the lateral section 12a of the magnet 12 (i.e., inclination angle (θ) = 90°). All the other conditions except the inclination angle (θ) remain constant.

As shown in FIG. 5, as the inclination angle (θ) decreases, torque ripple also reduces. It is also seen that when the inclination angle (θ) is not greater than approximately 80°, the torque ripple is lower than in the case in which the slit 40 is not provided. But an excessively small inclination angle (θ) may cause the outer end 40a of the slit 40 to contact the flux barrier 30. Thus, the inclination angle (θ**)** may need to have a value not less than 20°.

Therefore, if the inclination angle (θ) of each of the slits 40 is set to a value not greater than approximately 80°, the torque ripple may be suppressed.

In addition, each of the slits 40 is disposed in the proximity of the corresponding flux barrier 30.

As shown in FIG. 4, suppose that the lateral side 12a of the portion of the magnet 12 between the center point C and the edge E is divided into 11 parts by parting lines D₁ to D₁₀ parallel to the reference line S. In this case, the inner end 40b of the slit 40 is arranged to be positioned outside the parting line set as the eighth parting line D₈ when the parting lines are arranged in order from the side of the reference line S toward the edge E.

In other words, if one half the length of the magnet 12 is L, the inner end 40b of the slit 40 is arranged to be positioned farther toward the longitudinal section 12b than the parting line D₈ passing the point spaced from the longitudinal section 12b by the length of 3/11 x L, toward the center point C. By setting the position of each slit 40 in this manner, torque ripple may be suppressed.

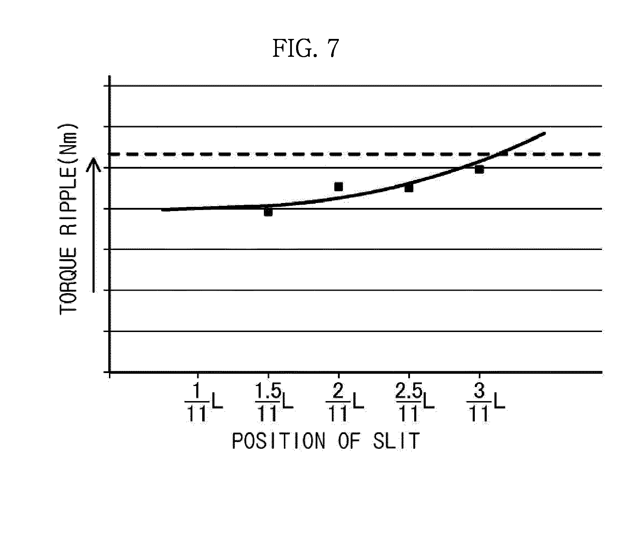

FIG. 7 illustrates a result (a graph) of a test conducted to study the relationship between the position of the slit 20 and torque ripple. The vertical axis represents magnitudes of torque ripple. The horizontal axis represents the position of the inner end 40b of the slit 40 indicated by distances of the parting lines D₁ to D₁₀ shown in FIG. 4 to the edge E (or longitudinal section 12b) of the magnet 12. The dashed line represents a test result for the case in which the slit 40 is not provided, given for comparison. All the other test conditions except the position of the slit 40 remain constant.

As shown in FIG. 7, the closer the slit 40 is positioned toward the edge E of the magnet 12, the lower the torque ripple is. It is also seen that when the position of the slit 40 is closer to the edge E than the position spaced approximately 3/11 x L from the edge E (i.e., the position of the parting line set as the eighth parting line D₈ when the parting lines are arranged in order from the side of the reference line S toward the edge E), the torque ripple is lower than in the case in which the slit 40 is not provided.

But positioning the slit 40 excessively close to the edge E may cause the slit 40 to contact the flux barrier 30, and therefore the slit 40 may need to be formed at a position farther toward the center point C than the position spaced 1/11 x L from the edge E (i.e., the position of the parting line set as the tenth parting line D₁₀ when the parting lines are arranged in order from the side of the reference line S toward the edge E).

When both the inclination angle (θ) and position of the slit 40 are considered together, setting the inclination angle (θ) to a value between about 40° and about 80° and forming the slit 20 at a position having a distance to the edge E in the range of about 1/11 x L to about 3/11 x L.

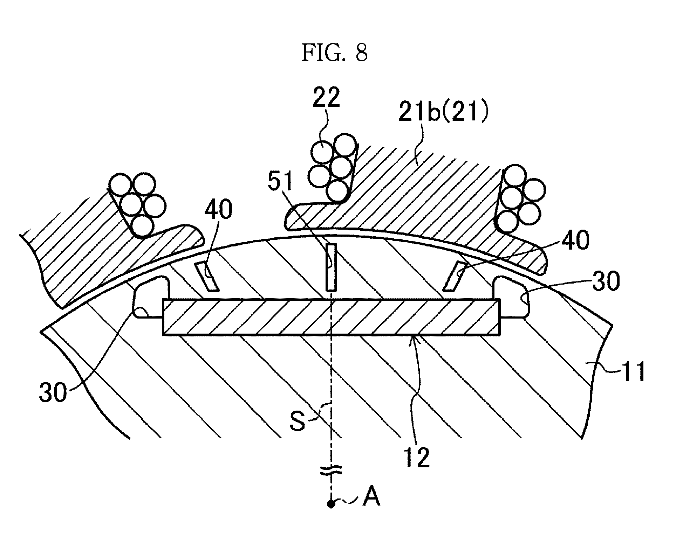

FIGS. 8 to 10 illustrate a motor according to further embodiments of the present invention. As in the above illustrated embodiment, if two slits 40 and 40 are arranged at predetermined positions and formed to have a predetermined inclination angle, torque ripple may be suppressed.

However, additional slits 40 may be formed by improving the characteristics of the motor. In this case, the slits 40 may be formed at positions axially symmetric across the reference line S by penetrating the rotor core 11 in the direction of rotation axis A, as shown in FIG. 8.

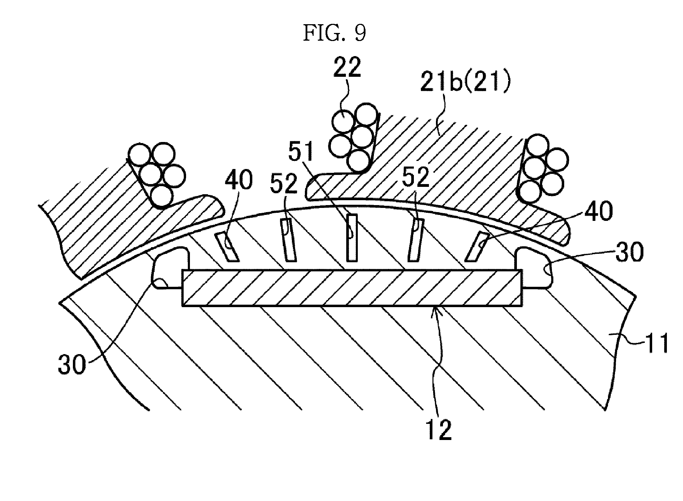

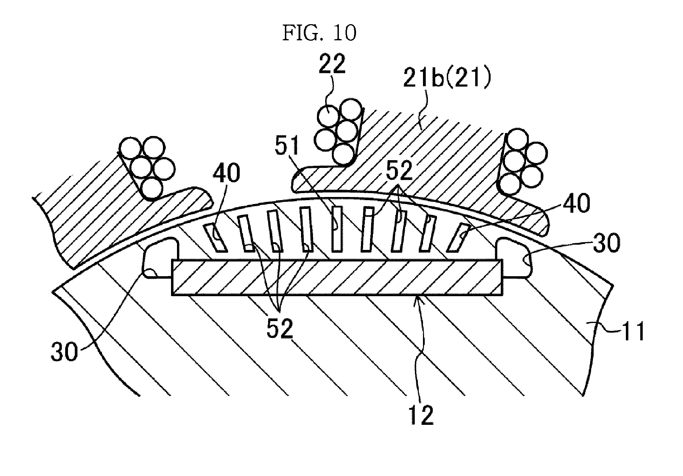

When three slits 40 are formed, an additional slit 40 (center slit 51) is disposed on the reference line S as shown in FIG. 8. When the additional slits 40 are provided, two additional slits 40 (auxiliary slits 52) are added at a time, as shown in FIG. 9 or FIG. 10. In this case, the auxiliary slits 52 are arranged between the center slit 51 and the both outermost slits 40 to have equally spaced positions and uniformly increased inclination angles (θ).

Thereby, it may be possible to increase the number of slits without degrading the effect of suppression of torque ripple obtained by a pair of slits 40 having a predetermined shape. Further, symmetrical arrangement of the slits 40 may provide high productivity and stable characteristics of the motor in any direction of rotation.

The brushless motor according to embodiments of the present invention is not limited to the above embodiments, but may have various embodiments.

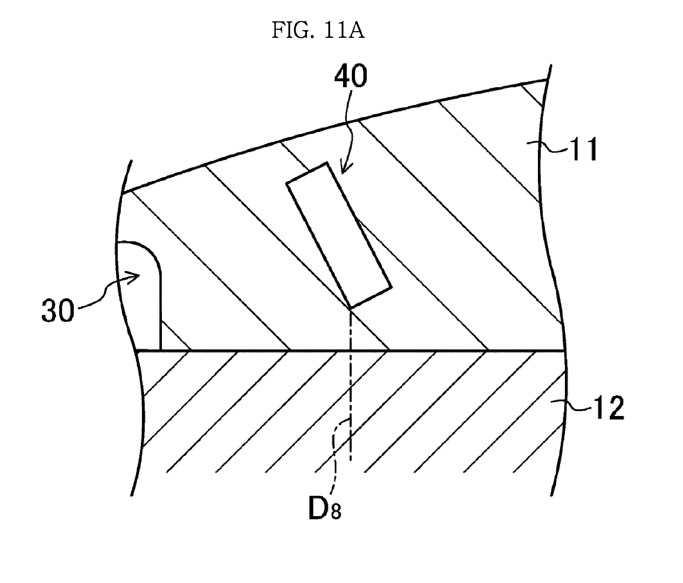

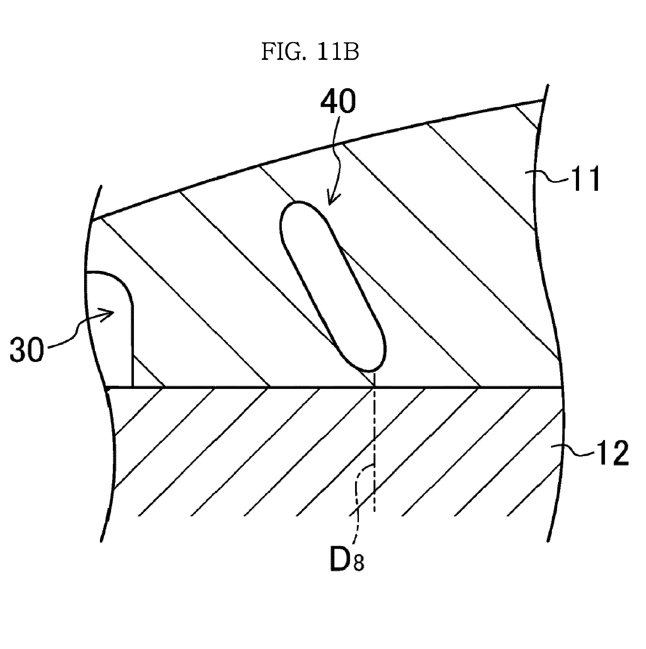

For example, the cross-sectional shape of the slit 40 disclosed in the illustrated embodiments is simply an example. The cross-section of the slit 40 may have a rectangular shape as shown in FIG. 11A or an elliptical shape as shown in FIG. 11B.

As is apparent from the above description, a brushless motor according to embodiments of the present invention may effectively suppress torque ripple and improve productivity.

Although a few embodiments of the present invention have been shown and described, it would be appreciated by those skilled in the art that changes may be made in these embodiments without departing from the principles of the invention, the scope of which is defined in the claims.

## Claims

1. A brushless motor comprising:
a rotor rotating about a rotation axis and having a rotor core and a plurality of magnets; and
a stator disposed around the rotor with a gap placed between the stator and the rotor;
wherein:
the magnets have the shape of a rectangular parallelepiped and are arranged to be equally spaced and embedded in an outer circumferential portion of the rotor core in a manner that allows a reference line radially extending from the rotation axis to be perpendicular to a center point between opposite edges of a lateral section of each of the magnets; and
the rotor core includes a pair of slits symmetrically disposed about the reference line, between the opposite edges of each of the magnets,
wherein each of the slits is inclined to allow an outer end thereof positioned radially outward from the rotation axis to be positioned further away from the reference line than an inner end thereof positioned radially inward, and when a portion of the magnet between the center point and each of the edges is divided into eleven portions by parting lines parallel to the reference line, the inner end of the slit is positioned outside a parting line set as an eighth parting line when the parting lines are arranged in order from a side of the reference line toward the edge.

2. The brushless motor according to claim 1, wherein an inclination angle of each of the slits relative to a line perpendicular to the reference line is not greater than 80°.

3. The brushless motor according to claim 1 or 2, wherein the rotor core includes only the pair of slits.

4. The brushless motor according to claim 1, 2 or 3, wherein the rotor core further includes a center slit disposed on the reference line and arranged in a penetrating manner in a direction of the rotation axis.

5. The brushless motor according to claim 4, wherein the rotor core further includes a group of auxiliary slits disposed axially symmetrically about the reference line, between the center slit and the pair of slits.
